# EUROPEAN PATENT APPLICATION

(11) **EP 2 843 933 A1**
(43) Date of publication of application: **04.03.2015**
(21) Application number: 14182751.9
(22) Date of filing: 29.08.2014
(51) Int. Cl.: H04N 1/387, H04N 1/60

(54) **Image display device and image display method**

(30) Priority: 29.08.2013 JP 2013178666
(71) Applicant: Seiko Epson Corporation, Shinjuku-ku Tokyo (JP)
(72) Inventor: Ono, Takuya, Suwa-shi, Nagano 392-8502 (JP); Akasaka, Tatsuo, Suwa-shi, Nagano 392-8502 (JP)
(74) Representative: Miller Sturt Kenyon

(57) **Abstract**

An image display device includes a display portion that displays a preview image of recording images. When pieces of data of the recording images have transparency information in addition to color information, the display portion displays the preview image of the recording images thereon while holding the transparency information.

## Description

### BACKGROUND

### 1. Technical Field

The present invention relates to an image display device, a recording apparatus, a program, and a display method.

### 2. Related Art

Existing image display devices that display information relating to an image have been used. For example, JP-A-2007-288773 and JP-A-2007-288772 disclose techniques of converting a color of a region of a recording image of which color is the same as a background color.

JP-A-8-211860 discloses a technique of, when a display color of an image or a background color is changed, determining whether or not the display color of the image and the background color are the same or the same type and validating the change only when they are not the same or the same type.

JP-A-2005-41146 discloses a technique of reading a T-shirt set on a platen with a charge-coupled device (CCD) sensor and displaying it.

However, in an image display device capable of displaying a preview image of a recording image that is to be recorded on a recording medium by a recording apparatus among these image display devices, there is the following problem. That is, a user cannot distinguish a portion displayed with a color (background color) of a background image and a portion displayed with a color set to the recording image on a portion on which the recording image is overlapped with the background image on the preview image when viewing the preview image in some cases.

JP-A-2007-288773 and JP-A-2007-288772 do not describe nor indicate a relation between the color of the recording image and the color of the background image on the preview image.

JP-A-8-211860 discloses the technique of only determining whether the change is valid or invalid when the display color of the image or the background color is changed. That is, JP-A-8-211860 does not disclose the technique of distinguishing whether the color of the preview image is the color of the background image or the color set to the recording image.

The technique disclosed in JP-A-2005-41146 does not have a configuration capable of changing the color of the background image on the preview image. That is, JP-A-2005-41146 does not disclose the technique of distinguishing whether the color of the preview image is the color of the background image on the preview image or the color set to the recording image.

### SUMMARY

An advantage of some aspects of the invention is to make it possible to distinguish, on a preview image of a recording image, whether a color of the preview image displayed on a display portion is a color of a background image on the preview image or a color set to the recording image.

In order to achieve the above-mentioned object, an image display device according to a first aspect of the invention includes a display portion that displays a preview image of a recording image. In the image display device, when data of the recording image has transparency information in addition to color information, the display portion displays the preview image of the recording image thereon while holding the transparency information.

An existing general recording target medium is white in many cases and a color of the background image on the preview image of the recording image is also white. Due to this, on the preview image of the recording image, whether a color of, in particular, a light-colored portion on the preview image is a color obtained by transmitting the color of the background image or a color set to the recording image without transmitting the color of the background image cannot be distinguished in some cases.

According to the aspect of the invention, the preview image of the recording image is displayed on the display portion while holding the transparency information. Therefore, if the color of the background image on the preview image is changed, the color of the portion that transmits the color of the background image is also changed with the change of the color of the background image on the preview image. On the other hand, the color of the portion that is set to the recording image without transmitting the color of the background image is not changed even if the color of the background image on the preview image is changed. Based on this, on the preview image of the recording image, whether the color of the preview image is the color of the background image on the preview image or the color set to the recording image can be distinguished.

The expression "when data of the recording image has transparency information in addition to color information" includes the case where the data has the transparency information such as a transmittance parameter in addition to information of RGB values as general color information and the like. The data having a transmittance of 0 may be included as long as the data has the transparency information. When the data has the transmittance of 0, it indicates that the data is non-transparent.

The expression "while holding the transparency information" indicates that "when data of the recording image has the transparency information, the transparency information is not converted into color information and is not deleted".

In the image display device according to a second aspect of the invention, it is preferable in the first aspect of the invention that the image display device include a receiver which receives change of a color of a background image on the preview image.

According to the aspect of the invention, the image display device includes the receiver which receives change of the color of the background image on the preview image. Therefore, the color of the background image on the preview image can be changed. Accordingly, on the preview image of the recording image, whether the color of the preview image is the color of the background image on the preview image or the color set to the recording image can be distinguished.

In the image display device according to a third aspect of the invention, it is preferable in the second aspect of the invention that the image display device include a changing portion which changes the color of the background image on the preview image automatically in accordance with recording setting of the recording image, and the receiver receives change of the color of the background image on the preview image by the changing portion.

The expression "recording setting of the recording image" corresponds to a what-is-called recording mode. Examples thereof include a mode in which recording is performed using white ink only, a mode in which recording is performed using white ink and color inks, and a mode in which recording is performed using any one color of color inks. It should be noted that the recording setting can be performed using a user interface or the like by a user.

According to the aspect of the invention, the image display device includes the changing portion which changes the color of the background image on the preview image automatically in accordance with recording setting of the recording image, and the receiver receives change of the color of the background image on the preview image by the changing portion. Therefore, on the preview image of the recording image, the change of the color of the background image on the preview image for distinguishing whether the color of the preview image is the color of the background image on the preview image or the color set to the recording image can be made automatically.

In the image display device according to a fourth aspect of the invention, it is preferable in any one of the first to third aspects of the invention that the display portion be capable of displaying a shape of a recording target medium as the background image on the preview image.

According to the aspect of the invention, the display portion is capable of displaying the shape of the recording target medium as the background image on the preview image. This enables the user to imagine a state where the recording image has been recorded on the recording target medium before the recording more accurately.

In the image display device according to a fifth aspect of the invention, it is preferable in any one of the first to fourth aspects of the invention that the display portion be capable of displaying a recording position of the recording image on the recording target medium on the preview image.

According to the aspect of the invention, the display portion is capable of displaying the recording position of the recording image on the recording target medium on the preview image. This enables the user to imagine the state where the recording image has been recorded on the recording target medium before the recording more accurately.

A recording apparatus according to a sixth aspect of the invention includes the image display device according to any one of the first to fifth aspects of the invention and a recording head that records the recording image on a recording target medium.

The recording apparatus according to the aspect of the invention displays the preview image of the recording image on the display portion of the image display apparatus while holding the transparency information. Accordingly, on the preview image of the recording image, whether the color of the preview image is the color of the background image on the preview image or the color set to the recording image can be distinguished.

A computer program product according to a seventh aspect of the invention causes a display portion to display a preview image of a recording image. In the program, when data of the recording image has transparency information in addition to color information, the display portion is made to display the preview image of the recording image while holding the transparency information.

The computer program product according to the aspect of the invention causes the display portion to display the preview image of the recording image while holding the transparency information. Accordingly, on the preview image of the recording image, whether the color of the preview image is the color of the background image on the preview image or the color set to the recording image can be distinguished.

A display method according to an eighth aspect of the invention causes a display portion to display a preview image of a recording image. In the display method, when data of the recording image has transparency information in addition to color information, the display portion is made to display the preview image of the recording image while holding the transparency information.

The display method according to the aspect of the invention causes the display portion to display the preview image of the recording image while holding the transparency information. Accordingly, on the preview image of the recording image, whether the color of the preview image is the color of the background image on the preview image or the color set to the recording image can be distinguished.

### BRIEF DESCRIPTION OF THE DRAWINGS

Embodiments of the invention will now be described by way of example only with reference to the accompanying drawings, wherein like numbers reference like elements.
Fig. 1 is a schematic perspective view illustrating a recording apparatus according to an embodiment of the invention.
Fig. 2 is a block diagram illustrating the recording apparatus in the embodiment of the invention.
Fig. 3 is an exploded view for explaining the configuration of a recording image on a preview image that is displayed on a display portion.
Fig. 4 is a view illustrating the preview image that is displayed on the display portion.
Fig. 5 is a view illustrating the preview image that is displayed on the display portion.
Fig. 6 is a view illustrating the preview image that is displayed on the display portion.
Fig. 7 is a view illustrating a specification screen of a background image on the preview image that is displayed on the display portion.
Fig. 8 is a view illustrating a preview image that is displayed on a display portion according to another embodiment.

### DESCRIPTION OF EXEMPLARY EMBODIMENTS

Hereinafter, a display device and a recording apparatus according to embodiments of the invention are described in detail with reference to the accompanying drawings.

Although in the following embodiments, description is made using, as an image display device, a touch panel provided on a recording apparatus, the image display device is not limited to the configuration. The image display device is not limited to the touch panel and is not limited to the image display device provided on the recording apparatus. For example, a personal computer (PC) as a separate body from the recording apparatus can be preferably used as the image display device and the configuration of the image display device is not particularly limited. For example, the image display device may have a configuration including a touch panel as a display portion, a configuration including a monitor as the display portion and a user interface, and the like.

Although in the following embodiment, description is made using, as the recording apparatus, an inkjet recording apparatus that discharges ink from a recording head and performs recording, the invention is not limited to the ink jet recording apparatus. For example, the invention also includes a recording apparatus of a transfer system, and the like.

Furthermore, the recording apparatus in the invention has a configuration in which a supporting portion (medium supporting portion) of a recording target medium is moved with respect to the recording head. The recording apparatus in the invention also includes a recording apparatus having a configuration in which the recording head is moved with respect to the medium supporting portion for recording without moving the medium supporting portion. In addition, the recording apparatus in the invention also includes a recording apparatus having a configuration in which both of the recording head and the medium supporting portion are moved.

In any of the following embodiments, description is made using, as the recording target medium, a T-shirt as a fabric. However, the recording target medium that can be used in the invention is not limited to a T-shirt or to a fabric.

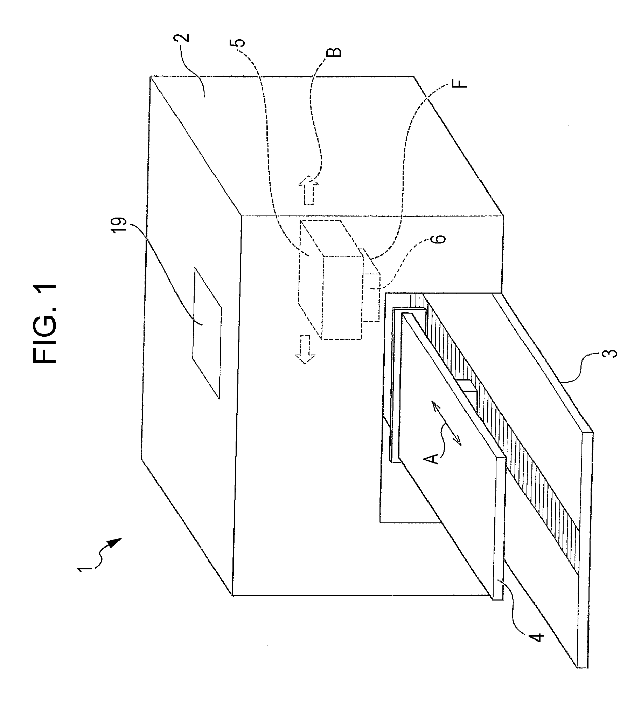

### Embodiment (Fig. 1 to Fig. 6)

Fig. 1 is a schematic perspective view illustrating a recording apparatus according to an embodiment of the invention.

As illustrated in Fig. 1, a recording apparatus 1 in the embodiment includes a medium supporting portion 4. A transportation portion 3 transports a recording target medium by moving the medium supporting portion 4 in a transportation direction A.

An apparatus main body 2 includes a recording head 6. The recording apparatus 1 discharges ink onto the recording target medium from an ink discharge surface F of the recording head 6 while making the recording head 6 reciprocate in a scanning direction B intersecting with the transportation direction A through a carriage 5 so as to form a desired image.

The recording apparatus 1 in the embodiment can perform recording with white ink for forming a foundation layer and color inks (black ink, cyan ink, magenta ink, yellow ink) for forming an image.

However, the recording apparatus is not limited to the configuration. For example, metallic ink can be used as the ink for forming the foundation layer and inks of other colors can be used as the inks for forming the image.

Furthermore, the recording apparatus 1 in the embodiment includes a touch panel 19. The touch panel 19 serves as a display portion that displays a preview image of a recording image and serves as an image display device.

Next, the electric configuration of the recording apparatus 1 in the embodiment is described.

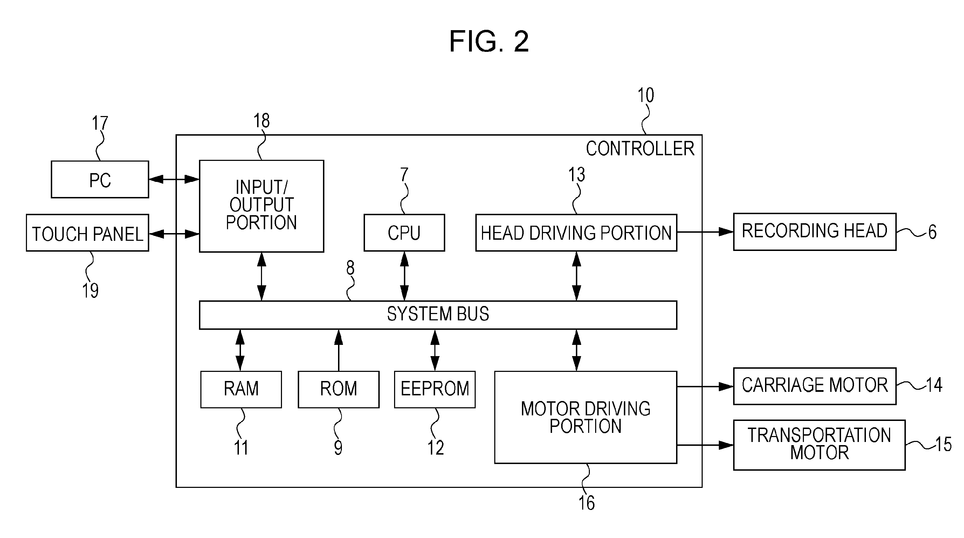

Fig. 2 is a block diagram illustrating the recording apparatus 1 in the embodiment.

A controller 10 is provided with a central processing unit (CPU) 7 that controls the recording apparatus 1 overall. The CPU 7 is connected to a read-only memory (ROM) 9, a random access memory (RAM) 11, and an electrically erasable programmable read-only memory (EEPROM) 12 through a system bus 8. The ROM 9 stores therein various control programs, maintenance sequences, and the like that are executed by the CPU 7. The RAM 11 can store therein data temporarily. The EEPROM 12 is a non-volatile memory.

The CPU 7 is connected to a head driving portion 13 for driving the recording head 6 through the system bus 8.

The CPU 7 is connected to a motor driving portion 16 through the system bus 8. The motor driving portion 16 drives a carriage motor 14 for moving the carriage 5 and a transportation motor 15 provided on the transportation portion 3 for transporting the recording target medium.

Moreover, the CPU 7 is connected to an input/output portion 18 for inputting recording data or the like from an external apparatus such as a PC 17 through the system bus 8, and so on. The input/output portion 18 is also connected to the touch panel 19. External storage devices such as a universal serial bus (USB) memory can be connected to the input/output portion 18. The recording apparatus 1 can read image data that is stored in an external storage device connected to the input/output portion 18 and execute recording without using the PC 17, that is, can execute what-is-called direct printing.

The recording apparatus 1 in the embodiment includes the touch panel 19 as the display portion that displays a preview image of a recording image. When data of the recording image has transparency information in addition to color information, the preview image of the recording image can be displayed on the touch panel 19 while holding the transparency information.

On the other hand, the PC 17 in the embodiment includes a monitor (not illustrated) as the display portion that displays the preview image of the recording image and a user interface (not illustrated). When data of the recording image has transparency information in addition to color information, the preview image of the recording image can be displayed on the monitor while holding the transparency information. Therefore, the PC 17 in the embodiment also corresponds to the image display device in the invention.

The expression "when data of the recording image has transparency information in addition to color information" includes the case where the data has the transparency information such as a transmittance parameter in addition to information of RGB values as general color information. The data having a transmittance of 0 may be included as long as the data has the transparency information.

The expression "while holding the transparency information" indicates that "when the data of the recording image has the transparency information, the transparency information is not converted into color information and is not deleted". In the embodiment, the preview image is displayed on at least one of the touch panel 19 and the monitor of the PC 17 while holding the transparency information. Therefore, the controller 10 stores the data of the recording image in the RAM 11 without converting the transparency information of the data into color information and deleting it.

An existing general recording target medium is white in many cases and a color of the background image on the preview image of the recording image is also white. Therefore, on the preview image of the recording image, whether a color of, in particular, a light-colored portion on the preview image is a color obtained by transmitting the color of the background image or a color set to the recording image without transmitting the color of the background image cannot be distinguished in some cases.

Each of the recording apparatus 1 and the PC 17 in the embodiment displays the preview image of the recording image on the display portion while holding the transparency information. Therefore, for example, if the color of the background image on the preview image is changed, the color of the portion that transmits the color of the background image is also changed with the change of the color of the background image on the preview image. On the other hand, the color of the portion that is set to the recording image without transmitting the color of the background image is not changed even if the color of the background image on the preview image is changed. Based on this, on the preview image of the recording image, the portion displayed with the color of the background image on the preview image and the portion displayed with the color set to the recording image can be distinguished from each other.

The ROM 9 stores therein information of the shapes and the like of the recording target media that can be used by the recording apparatus 1. Furthermore, the EEPROM 12 can store therein the shape and the like of the recording target medium that can be used by the recording apparatus 1 newly additionally.

The ROM 9 stores therein a plurality of colors of the background image on the preview image of the recording image that can be displayed by the touch panel 19 and the PC 17. Furthermore, the EEPROM 12 can store therein the color of the background image on the preview image of the recording image that can be displayed by the touch panel 19 and the PC 17 newly additionally.

The recording apparatus 1 in the embodiment can change the color of the background image on the preview image of the recording image under control by the controller 10 in accordance with information input by a user from at least one of the touch panel 19 and the PC 17. That is to say, the controller 10 has a function as a receiver that receives change of the color of the background image on the preview image of the recording image.

Therefore, on the preview image of the recording image, whether the color of the preview image is the color of the background image on the preview image or the color set to the recording image can be distinguished.

A computer program product that causes the display portion to display the preview image of the recording image as a program according to the invention may be used instead of the image display device. In the program, when data of the recording image has transparency information in addition to color information, the display portion is made to display the preview image of the recording image while holding the transparency information.

With the program, on the preview image of the recording image, whether the color of the preview image is the color of the background image on the preview image or the color set to the recording image can be distinguished as in the recording apparatus 1 in the embodiment.

The program may encompass contents described in the specification as the characteristics of the recording apparatus 1 in the embodiment.

Furthermore, a display method that causes the display portion to display the preview image of the recording image as a display method according to the invention may be performed. In the display method, when data of the recording image has transparency information in addition to color information, the display portion is made to display the preview image of the recording image while holding the transparency information.

By performing the display method, on the preview image of the recording image, whether the color of the preview image is the color of the background image on the preview image or the color set to the recording image can be distinguished.

The display method may encompass the contents described in the specification as the characteristics of the recording apparatus 1 in the embodiment.

The recording apparatus 1 in the embodiment can change the color of the background image on the preview image of the recording image under control by the controller 10 in accordance with information input by a user from the touch panel 19 and the PC 17.

However, the controller 10 may have a function as a changing portion that changes the color of the background image on the preview image automatically in accordance with recording setting of the recording image, for example, changes the color thereof between black and white. The color changed automatically is received as the color of the background image on the preview image.

The expression "recording setting of the recording image" corresponds to a what-is-called recording mode. Examples thereof include a mode in which recording is performed using white ink only, a mode in which recording is performed using white ink and color inks, and a mode in which recording is performed using any one color of color inks when the expression is used for the recording apparatus that performs recording using the white ink for foundation and the color inks for image formation. For example, when recording is performed in the mode in which recording is performed using the white ink only, the recording image is difficult to be recognized if the color of the background image is set to white. For coping with this, the color of the background image may be changed to black automatically in such a case. It should be noted that the recording setting can be performed using the user interface or the like by a user.

With this configuration, on the preview image of the recording image, the change of the color of the background image on the preview image for distinguishing whether the color of the preview image is the color of the background image on the preview image or the color set to the recording image can be made automatically.

Next, the preview image that is displayed on each of the touch panel 19 and the monitor of the PC 17 as the display portions is described in detail. In the following description, description is made using the touch panel 19 of the recording apparatus 1 as the display device. However, the same holds true for the monitor of the PC 17.

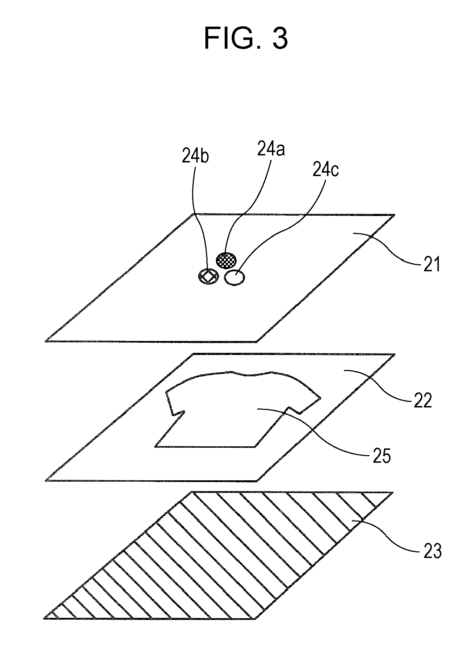

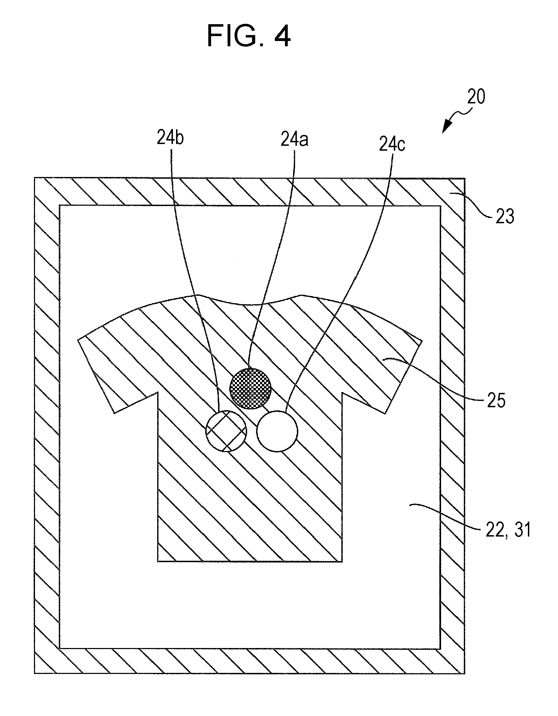

Fig. 3 is an exploded view for explaining the configuration of the recording image on the preview image that is displayed on the display portion, and Fig. 4 to Fig. 6 are views illustrating the preview image that is displayed on the display portion.

As illustrated in Fig. 3, a recording image on a preview image 20 that is displayed on the touch panel 19 is constituted by three layers of a recording image layer 21, a background image layer 22, and a background color layer 23. The recording image layer 21 constitutes images 24a, 24b, and 24c as images that are recorded on the recording target medium. The background image layer 22 constitutes a background image 25 as the recording target medium (T-shirt). The background color layer 23 constitutes a color (background color) of the recording target medium.

The images 24a, 24b, and 24c are circular recording images having different colors to each other.

Fig. 4 is a view illustrating a state where the recording image layer 21, the background image layer 22, and the background color layer 23 as illustrated in Fig. 3 are displayed in an overlapped manner. The preview image 20 on the touch panel 19 is displayed in this manner.

On the preview image 20 as illustrated in Fig. 4, the color of the recording target medium as the color of the background color layer 23 is different from any of the colors of the images 24a, 24b, and 24c. Therefore, any of the images 24a, 24b, and 24c are observed clearly.

However, when the color of the recording target medium as the color of the background color layer 23 is the same or the same type as any of the colors of the images 24a, 24b, and 24c, the image of which color is the same or the same type as the color of the background color layer 23 is not observed clearly.

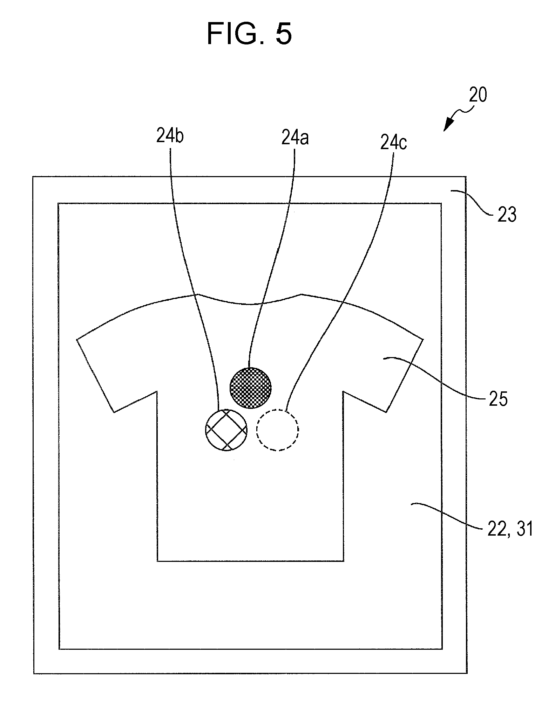

Fig. 5 illustrates the preview image 20 when the color of the background color layer 23 and the color of the image 24c are the same.

As illustrated in Fig. 5, the color of the image 24c is the same as the color of the background color layer 23, so that the image 24c is not observed clearly.

Meanwhile, when data of the recording image has transparency information in addition to color information, the recording apparatus 1 in the embodiment can display the preview image 20 of the recording image on the touch panel 19 while holding the transparency information. In the recording apparatus 1 in the embodiment, whether the image 24c corresponds to a portion that transmits the color of the background image 25 or a portion having the set color without transmitting the color of the background image 25 can be determined easily by changing the color of the background image 25.

To be specific, when the color of the background color layer 23 on the preview image 20 as illustrated in Fig. 5 is changed to another color, if the preview image 20 is displayed as illustrated in Fig. 4 (the color of the image 24c is kept), it is found that the image 24c corresponds to the portion having the set color without transmitting the color of the background image 25.

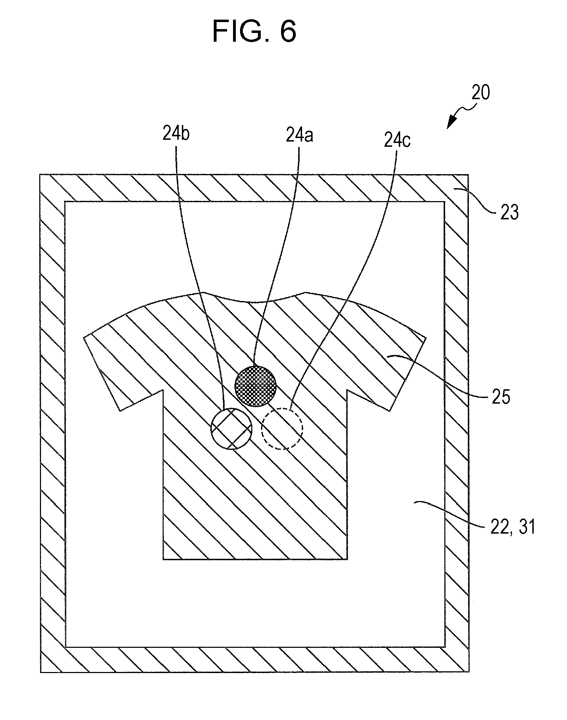

On the other hand, when the color of the background color layer 23 on the preview image 20 as illustrated in Fig. 5 is changed to another color, if the preview image 20 is displayed as illustrated in Fig. 6 (the color of the image 24c is changed with the change of the color of the background color layer 23), it is found that the image 24c corresponds to the portion transmitting the color of the background image 25.

As illustrated in Fig. 4 to Fig. 6, in the recording apparatus 1 in the embodiment, the touch panel 19 can display the shape of the recording target medium as the background image 25 on the preview image 20. Furthermore, the touch panel 19 can display, on the preview image 20, a recording position of the recording image on the recording target medium. That is to say, the positions of the images 24a, 24b, and 24c with respect to the background image 25 can be displayed on the preview image 20.

This enables the user to imagine a state where the recording image has been recorded on the recording target medium before the recording more accurately.

In addition, the positions and the sizes of the images 24a, 24b, and 24c with respect to the background image 25 can be also changed on the touch panel 19.

As illustrated in Fig. 4 to Fig. 6, the recording apparatus 1 in the embodiment includes a receiver that receives change of the color of the recording target medium on the preview image 20, and the preview image 20 can be displayed on the touch panel 19 while the color of the recording target medium and the color of a periphery 31 of the recording target medium are made different. To be specific, the color of the background color (color of the background color layer 23) and the color of the periphery 31 of the recording target medium can be changed independently.

This enables the user to imagine the state before the recording image is recorded on the recording target medium in advance more accurately by making the color of the recording target medium different from the color of the periphery thereof for display.

In the embodiment, the background image layer 22 is provided and the background image layer 22 is constituted by the semi-transparent background image 25 having the shape of the recording target medium and the peripheral portion of the background image 25, which forms the periphery 31 of the recording target medium. With this configuration, the recording apparatus 1 in the embodiment can easily change the shape of the recording target medium, the color of the recording target medium (color of the background color layer 23), and the color of the periphery 31 of the recording target medium for display. However, the invention is not limited to the configuration.

The display of the shape of the recording target medium and the change of the color of the recording target medium are described in detail below.

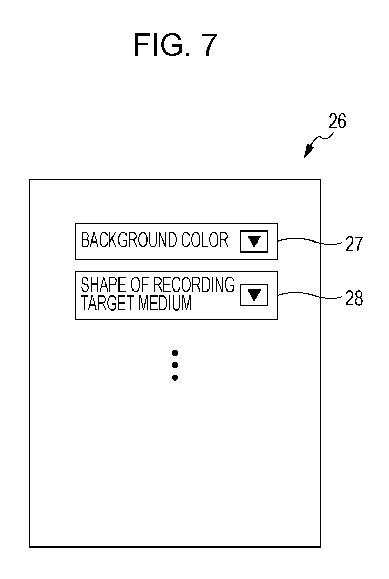

Fig. 7 is a view illustrating a specification screen 26 of the background image 25 on the preview image 20 that is displayed on the touch panel 19.

A pull-down button 27, a pull-down button 28, and the like are provided on the specification screen 26 of the background image 25 on the preview image 20. The pull-down button 27 allows the background color of the background image 25 to be specified. The pull-down button 28 allows the shape of the recording target medium to be specified. The user can specify the background color of the background image 25, the shape of the recording target medium, and the like using the pull-down button 27, the pull-down button 28, and the like, respectively.

On the preview images as illustrated in Fig. 4 to Fig. 6, a region for indicating a position at which the recording image can be recorded in the recording target medium clearly may be displayed, and scale may be displayed so as to enable the user to recognize the size of the recording image easily.

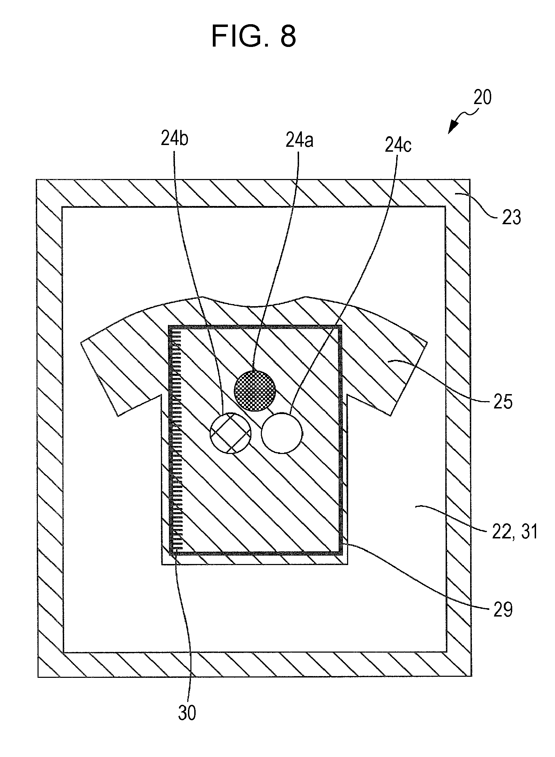

Fig. 8 is a view illustrating a preview image that is displayed on the display portion in an embodiment different from the above-mentioned embodiment, which can display the region and the scale.

As illustrated in Fig. 8, a region 29 for indicating a position at which the recording image can be recorded in the recording target medium clearly and scale 30 are displayed on the preview image 20 in the embodiment. When the medium supporting portion 4 of various sizes can be used in the recording apparatus 1, the size of the region 29 may be changed to be displayed in accordance with the size of the medium supporting portion 4. Furthermore, on the preview image 20 in the embodiment, the scale 30 is displayed on the region 29 only at the left side so as not to hide the recording image. Alternatively, the scale may be displayed on the region 29 at the upper side or the lower side or may be displayed in a grid form on overall the region 29, for example.

The foregoing description has been given by way of example only and it will be appreciated by a person skilled in the art that modifications can be made without departing from the scope of the present invention.

## Claims

1. An image display device (1, 17) comprising a display portion (19) configured to display a preview image (20) of a recording image,
wherein when data of the recording image has transparency information in addition to color information, the display portion is configured to display the preview image of the recording image thereon while holding the transparency information.

2. The image display device according to Claim 1, further including a receiver (10) arranged to receive a change of a color of a background image (25) on the preview image.

3. The image display device according to Claim 2, further including a changing portion arranged to change the color of the background image (25) on the preview image automatically in accordance with recording setting of the recording image,
wherein the receiver is arranged to receive the change of the color of the background image on the preview image by the changing portion.

4. The image display device according to any one of the preceding claims,
wherein the display portion (19) is capable of displaying a shape of a recording target medium as a background image (25) on the preview image.

5. The image display device according to any one of the preceding claims,
wherein the display portion (19) is capable of displaying a recording position (29) of the recording image on the recording target medium on the preview image.

6. A recording apparatus (1) comprising:
the image display device according to any one of the preceding claims; and
a recording head (6) configured to record the recording image on a recording target medium.

7. A computer program product that causes a display portion (19) to display a preview image (20) of a recording image,
wherein when data of the recording image has transparency information in addition to color information, the display portion is made to display the preview image of the recording image while holding the transparency information.

8. A display method that causes a display portion (19) to display a preview image (20) of a recording image,
wherein when data of the recording image has transparency information in addition to color information, the display portion is made to display the preview image of the recording image while holding the transparency information.
